(19) Europäisches Patentamt / European Patent Office / Office européen des brevets

(11) **EP 3 010 689 B1**

(12) **FASCICULE DE BREVET EUROPEEN**

(45) Date de publication et mention
de la délivrance du brevet:
**17.07.2019 Bulletin 2019/29**

(21) Numéro de dépôt: **14738563.7**

(22) Date de dépôt: **18.06.2014**

(51) Int Cl.:
**B27B 17/00** *(2006.01)* **B23D 57/02** *(2006.01)*

(86) Numéro de dépôt international:
**PCT/FR2014/051516**

(87) Numéro de publication internationale:
**WO 2014/202907 (24.12.2014 Gazette 2014/52)**

(54) **DISPOSITIF ET PROCÉDÉ DE DÉCOUPE DE PIÈCES EN MATÉRIAU METALLIQUE OU COMPOSITE**

VORRICHTUNG UND VERFAHREN ZUM SCHNEIDEN VON TEILEN AUS METALL ODER VERBUNDSTOFF

DEVICE AND PROCESS FOR CUTTING METALLIC OR COMPOSITE PARTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2013 FR 1355773**

(43) Date de publication de la demande:
**27.04.2016 Bulletin 2016/17**

(73) Titulaire: **Mecachrome France
37403 Amboise Cedex (FR)**

(72) Inventeurs:
• **BONNET, Cedric**
  **F-71260 PERONNE (FR)**
• **DE PONNAT, Arnaud**
  **F-37210 Vouvray (FR)**
• **MARTIN, Olivier**
  **F-45230 Sainte Genevieve Des Bois (FR)**

• **LOISON, Ludovic**
  **F-37100 Tours (FR)**
• **BOSSELUT, Antoine**
  **F-37530 SOUVIGNY-DE-TOURAINE (FR)**
• **DE OLIVEIRA CUNHA, Frédéric**
  **F-37150 Bléré (FR)**

(74) Mandataire: **Benech, Frédéric
Cabinet Benech
15, rue d'Astorg
75008 Paris (FR)**

(56) Documents cités:
EP-A2- 0 266 022          EP-A2- 1 275 480
EP-A2- 2 226 133          WO-A1-2014/072661
CN-U- 202 878 426         DE-A1- 19 643 390
DE-A1-102011 003 996      DE-U1-202004 007 148
JP-A- H10 137 958         NL-A- 8 603 213
US-A- 5 935 456

**Description**

La présente invention concerne un dispositif de découpe d'une pièce en matériau métallique ou composite suivant une trajectoire déterminée selon le préambule de la revendication 1.

Elle concerne également un procédé de découpe suivant une trajectoire déterminée d'une telle pièce métallique ou composite selon le préambule de la revendication 19.

Elle trouve une application particulièrement importante dans le domaine de la découpe de pièces mécaniques de dureté importante, c'est à dire d'une dureté Rockwell supérieure à 30, notamment pour la formation d'ébauches de pièces en matériau métallique (notamment aluminium, titane, aciers) ou composite (notamment avec matrices thermodurcissable ou thermoplastique et fibres de carbone) par exemple utilisables dans l'aéronautique.

Plus précisément et en cas de fabrication d'une pièce mécanique métallique il est connu de partir d'un bloc de matière, dit brut, par exemple de fonderie, puis de l'usiner pour obtenir ainsi une ébauche (semi produit) de la pièce recherchée. Cette ébauche est ensuite affinée pour la formation du produit fini.

Plus l'ébauche résultante est proche de la forme finale désirée, moins il est nécessaire de retravailler la pièce et plus les chutes de matière sont faibles.

Il existe donc un besoin pour un dispositif et un procédé permettant de produire avec précision des formes complexes dans un brut, et ce de façon aussi proche que possible de la forme de la pièce, ce qui permet de limiter le nombre d'étapes et les pertes de matière.

On connaît déjà des dispositifs de scie à lame ou à chaîne adaptés pour effectuer des découpes selon des trajectoires déterminées.

Mais ces dispositifs concernent d'une part le sciage selon des trajectoires rectilignes ou en U et d'autre part la découpe de matériaux tendres et/ou fibreux tel que le bois.

On peut ainsi citer le document CN 202 878 426 qui décrit un dispositif de découpe du type scie circulaire comportant une chaine sans fin montée coulissante dans un guide dont la trajectoire est définie par un guide présentant la forme d'une plaque en U.

Ils ne sont donc pas adaptés pour la formation d'ébauches de pièces métalliques ou composites plus dures. Ils ne permettent pas non plus des trajectoires complexes.

Il est aussi connu [DE 20 2004 007 148] un dispositif comprenant un guide de chaîne muni de dents avec arêtes de coupe en saillie.

Un tel dispositif ne permet cependant pas de découpe dans la largeur et/ou la longueur d'une tôle (c'est à dire dans ses grandes dimensions) mais seulement dans le sens de l'épaisseur. Elle ne permet pas non plus et notamment de découpe avec une

trajectoire compliquée, comme c'est le cas d'une trajectoire sinusoïdale.

Le document NL 8 603 213 montre l'ensemble des caractéristiques des préambules des revendications 1 et 19. Il montre notamment un dispositif de découpe d'un profil dans un bloc en matière plastique, suivant une trajectoire formée par un guide qui présente au moins un point d'inflexion et un support pour un élément de coupe, monté coulissant dans le guide.

Cet élément de coupe se présente sous la forme d'arêtes de scie et n'est pas adapté à la découpe de blocs en matériaux métalliques ou composites.

On connaît également des dispositifs de découpe par électro-érosion ou découpe à fil, par jet d'eau ou au laser.

Si ici ces techniques peuvent être utilisées pour l'usinage de formes complexes, encore faut-il qu'elles soient formées de surfaces réglées (génératrices rectilignes) et sur de faibles profondeurs de découpe (préférentiellement $\leq$ 300 mm).

La présente invention vise à fournir un dispositif et un procédé de découpe répondant mieux que ceux antérieurement connus aux exigences de la pratique, notamment en ce qu'elle permet un gain de temps d'usinage par rapport au techniques connues, en ce qu'elle autorise des découpes, avec un débit copeaux supérieur, de formes complexes, permettant des trajectoires avec des changements de direction nombreux et rapprochés, et ce sur des longueurs et/ou des largeurs de pièces de dimensions importantes.

Par dimensions importantes on entend des dimensions de pièces à découper, supérieures à 600 mm, par exemple supérieures à 1m, 1m50 ou 2m voire plus.

L'épaisseur du bloc dans lequel les pièces sont découpées peut par contre et quant à elle être inférieure à 300 mm (souvent le cas dans l'aéronautique) ou supérieure, voire supérieure à 600 mm, et ce de façon non limitative. Elle peut par exemple, être inférieure à 200 mm, par exemple de l'ordre de 100 mm, la limite étant celle de l'épaisseur des pièces obtenues et de la taille transversale de la fente de découpe.

La présente invention permet également une économie de matière par pièce produite (jusqu'à 30% par rapport à l'art antérieur) du fait de la maîtrise de la géométrie de la forme de la découpe.

Elle autorise et concerne aussi, dans un de ses modes de réalisation, l'imbrication de plusieurs ébauches complexes dans un même brut et/ou part notamment de l'idée de faire pénétrer progressivement le système de découpe à l'intérieur du bloc, non seulement la partie coupante, à savoir les plaquettes de coupe, mais également sa partie guidante à savoir son guide.

Pour ce faire, l'invention propose essentiellement un dispositif de découpe d'une pièce dans un bloc en matériau métallique ou composite suivant une trajectoire déterminée, comprenant un guide formant ladite trajectoire et un support d'au moins un élément de coupe, souple ou articulé, caractérisé en ce que le support est monté coulissant dans le guide, et en ce qu'il comporte un flan latéral muni d'au moins une plaquette de coupe formant l'élément de coupe, comprenant une arête de coupe en saillie agencée pour effectuer la découpe dans une direction normale par rapport au dit flan.

Avantageusement le guide forme une trajectoire avec au moins un changement de direction.

Par trajectoire avec au moins un changement de direction on entend une trajectoire rectiligne ou courbe dans le plan parallèle au dit flan de la chaîne qui présente au moins un angle ou un point d'inflexion.

Plus avantageusement, le guide forme une trajectoire présentant au moins deux points d'inflexion.

Par trajectoire avec au moins deux points d'inflexion on entend une trajectoire rectiligne ou courbe dans le plan parallèle au flan qui présente au moins deux changements de concavité ou au moins deux séries de deux angles opposés par rapport au même côté.

Autrement dit on entend une trajectoire par exemple droite changeant de direction au moins quatre fois dans ledit plan axial, et/ou engendrant une ligne de coupe avec au moins deux ondulations et/ou quatre angles opposés deux à deux par rapport à un côté (par exemple supérieur à 5°) par rapport à la dite droite.

Dans un mode de réalisation avantageux le support est une chaîne sans fin.

Egalement avantageusement, le guide comprend une enceinte longitudinale, de passage du support ou de la chaîne, de largeur déterminée, et la ou les plaquettes sont agencées pour effectuer la découpe sur une largeur supérieure à la dite largeur déterminée.

L'enceinte est par exemple une chappe, ou une pince ou une rainure.

Par largeur, on entend la dimension dans le plan longitudinal parallèle au flan et orthogonal à la trajectoire.

En d'autres termes, dans ce mode de réalisation, la ou les plaquettes de découpe et leurs arêtes de coupe ont un encombrement hors tout (ou largeur) supérieur en largeur à celui du guide.

Une telle disposition va permettre l'introduction des maillons, des plaquettes de coupe ainsi que du guide dans le bloc de matière, c'est-à-dire le brut, et ce au fur et à mesure de la découpe et sur toute l'épaisseur dudit bloc.

Cette introduction complète permise par la disposition latérale de maintien du dispositif et l'attaque normale par rapport au flan de la chaîne, des plaquettes de coupe, et ce selon la trajectoire déterminée de la chaîne, autorise plus particulièrement des géométries complexes de la découpe de la pièce.

Dans des modes de réalisation avantageux, on a par ailleurs et/ou de plus recours à l'une et/ou à l'autre des dispositions suivantes :

- le guide comprend une enceinte longitudinale de passage de la chaîne (ou du support), ladite enceinte étant munie d'un côté d'une paroi latérale ajourée définissant une fente longitudinale et la chaîne (ou support) comprend plusieurs joues latérales de guidage réparties régulièrement le long de la chaîne, lesdites joues comprenant des bords périphériques agencés pour coopérer à frottement ou roulement avec les côtés de ladite fente sur la face externe de ladite paroi latérale ajourée;

- la chaîne étant formée d'un assemblage de maillons, chaque maillon est formé par deux axes parallèles reliés entre eux, de part et d'autre, par deux plaques de jonction, les joues latérales étant formées par certaines des plaques de jonction entre deux axes adjacents;

- la plaquette de coupe est fixée sur une joue latérale formant un porte plaquette;
- le porte plaquette comporte deux évidements cylindriques coopérant respectivement avec l'extrémité de l'axe des maillons adjacents et/ou un pion solidaire de la dite extrémité;
- l'enceinte comprend au moins une première nervure centrale interne longitudinale agencée pour coopérer à frottement ou roulement avec les axes d'articulation des maillons entre eux;
- l'enceinte comprend une seconde nervure centrale en vis à vis de la première nervure;
- la distance orthogonale entre la première et la seconde nervure est égale au diamètre D des axes d'articulation + d, avec d inférieure à 0,1 mm;
- le guide est précontraint dans le sens longitudinal de la chaîne et/ou du guide (i.e. dans le sens transversal du guide). Par précontraint on entend tendu avec une force de traction prédéterminée par exemple supérieure à 50 daN ;
- le dispositif comporte des moyens de lubrification sous émulsion par arrosage de l'intérieur du guide. Le débit d'arrosage est alors fonction des paramètres de la découpe, et est déterminé de façon connue en elle-même;
- le dispositif comporte des moyens de bridage latéraux du guide aux extrémités, agencés pour maintenir et rigidifier le guide dans les trois directions d'un repère axionométrique. Les moyens de bridage sont par exemple formés par des pièces de serrage connus en eux même, par vis ou vérin ;
- la plaquette de coupe comporte un décrochement présentant une face de forme concave suivant un angle aigu ou droit par rapport à l'arête de coupe, agencée pour fragmenter les copeaux générés au niveau de ladite arête de coupe;

- la plaquette est amovible et comporte des moyens de fixation sur le porte plaquette par vis;
- la trajectoire et/ou le guide présente une forme au moins en partie sinusoïdale ;
- la chaîne comporte plusieurs plaquettes de coupe agencées pour que les arêtes de coupe d'au moins deux plaquettes soient décalées, avec un recouvrement inférieur à 2 mm par exemple de 1 mm.

L'invention propose également un procédé de découpe utilisant un dispositif tel que décrit ci-avant.

Elle propose également un procédé de découpe d'une pièce dans un bloc tel que défini à la revendication 19.

Avantageusement la trajectoire comprend au moins deux points d'inflexion.

Avantageusement la ligne de découpe est effectuée sur une largeur supérieure à celle du guide et/ou le support est formé d'une chaîne constituée par un assemblage de maillons.

Dans un mode de réalisation avantageux, on effectue ladite découpe sur une longueur (profondeur) de pièce supérieure ou égale à 600 mm, par exemple supérieure à 3 m, par exemple supérieure à 5 m et/ou sur une largeur de pièce et/ou de bloc supérieure à 600 mm, par exemple supérieure à 1 m.

Avantageusement on effectue la découpe sur une épaisseur E de bloc inférieure à 300 mm.

Egalement avantageusement on découpe la pièce selon une trajectoire comprenant au moins un changement de direction.

Dans un mode de réalisation avantageux on précontraint le guide en traction avant découpe.

Avantageusement la trajectoire comprend plusieurs (plus de deux) changements de directions et/ou est au moins en partie sinusoïdale.

Dans un mode de réalisation avantageux, on découpe simultanément au moins deux plaques ou pièces imbriquées correspondantes l'une dans l'autre à partir d'un bloc d'épaisseur déterminée.

L'invention sera mieux comprise à la lecture de la description qui suit de modes de réalisation donnés ci-après à titre d'exemples non limitatifs.

La description se réfère aux dessins qui l'accompagnent dans lesquels :

La figure 1 est une représentation schématique en vue de face d'un dispositif selon un mode de réalisation de l'invention.

La figure 1A est une vue arrière en perspective axonométrique partielle du mode de réalisation de la figure 1.

La figure 1B est une vue schématique en perspective d'un exemple de bloc découpé par un dispositif selon l'invention, sur laquelle sont également précisées les dimensions de longueur, largeur et épaisseur d'un bloc telles qu'utilisées dans le cas de la présente description.

La figure 1C illustre la trajectoire déterminée de la coupe de la figure 1B pour définition de son paramétrage.

La figure 2 est une vue en perspective d'une portion de guide avec chaîne selon le mode de réalisation de l'invention plus particulièrement décrit ici.

La figure 3 est une vue de dessus d'une plaquette de découpe selon un mode de réalisation de l'invention.

La figure 4 est une vue schématique illustrant les possibilités de déplacement des axes des maillons d'une chaîne dans son guide appartenant à un dispositif selon un mode de réalisation de l'invention.

La figure 5 illustre schématiquement les changements de direction possibles autour d'un axe colinéaire à celui de la chaîne, lors d'une découpe telle qu'elle peut être obtenue avec l'invention.

La figure 6 est une vue de face en perspective d'un autre mode de réalisation de plaquette dans son guide et d'une joue adjacente, selon l'invention.

Les figures 7A et 7B sont des vues latérales montrant l'action d'une arête de coupe d'une plaquette sur un bloc, avec casse copeau selon un mode de réalisation de l'invention.

La figure 8 est une vue schématique illustrant la précontrainte selon un mode de réalisation d'un guide selon l'invention.

Les figures 9 à 11 sont des vues en perspectives de pièces découpées.

La fin 11A est une vue schématique en coupe d'un ensemble de plaques.

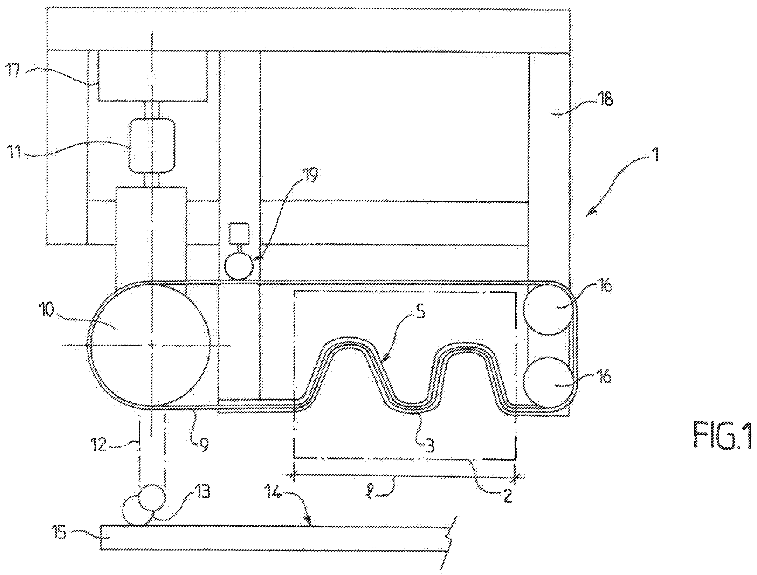

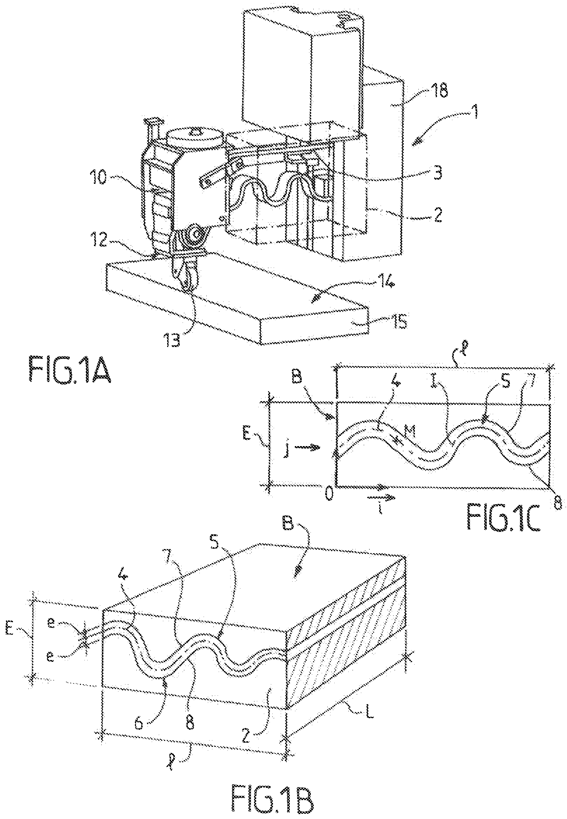

Les figures 1 et 1A montrent un dispositif 1 de découpe d'une pièce 2 (cf. figure 1B et trait mixte sur les figures 1 et 1A) à partir d'un bloc en matériau métallique ou composite B de longueur L, de largeur l et d'épaisseur E. Le dispositif comprend un guide 3 suivant une trajectoire déterminée 4 (trait mixte), la trajectoire étant par exemple une courbe 5 telle que représentée sur la figure 1C.

Plus précisément la courbe 5 est formée par le lieu des points $M(x_0, y_0)$ où $x_0$ et $y_0$ sont des fonctions d'un paramètre t et telles que :

$$\overrightarrow{OM} = x_0\,(t)\,\vec{i} + y_0(t)\vec{j}$$

avec

$$\frac{d\overrightarrow{OM}}{dt} = x'_0(t)\,\vec{\imath} + y'_0(t)\vec{\jmath}$$

Cette trajectoire définit un trait 6 de coupe de largeur 2e lui-même défini par les données des courbes 7 et 8 (espacées entre elles de 2e). Le trait de coupe est centré sur la courbe 5 qui forme aussi la fibre neutre de la découpe.

Les courbes 7 et 8 sont alors définies de la façon suivante :

$$(7)\quad\begin{cases} x_1(t) = x_0(t) + y'_0(t)\,\text{x}\,\dfrac{e}{\sqrt{x'_0(t)^2 + y'_0(t)^2}} \\[4mm] y_1(t) = y_0(t) - x'_0(t)\,\text{x}\,\dfrac{e}{\sqrt{x'_0(t)^2 + y'_0(t)^2}} \end{cases}$$

$$(8)\quad\begin{cases} x_2(t) = x_0(t) - y'_0(t)\,\text{x}\,\dfrac{e}{\sqrt{x'_0(t)^2 + y'_0(t)^2}} \\[4mm] y_2(t) = y_0(t) + x'_0(t)\,\text{x}\,\dfrac{e}{\sqrt{x'_0(t)^2 + y'_0(t)^2}} \end{cases}$$

Le dispositif 1 comprend une chaîne sans fin 9 (cf. figure 1) qui est de façon connue en elle-même entrainée d'un côté par une couronne 10 rotative actionnée en rotation grâce à un motoréducteur 11 et 17 par exemple électrique, le tout étant porté par un chariot 12 de support, et un élément roulant 13 pour assurer la translation du système parallèlement à la table agencé pour coopérer avec la surface 14 d'une plaque de guidage 15, et le renvoi de la chaîne est assuré par deux pignons 16 fous ou non, d'écartement de la chaîne.

Le moteur 11 est commandé de façon connue en elle-même par un automate (non représenté), pour effectuer la découpe selon les modalités choisies (vitesse de coupe, avance etc...) .

Le dispositif comprend également une structure 18 de support de l'ensemble et des moyens 19 de mesure de la tension de la chaîne, de sa vitesse et/ou de son degrés d'usure etc... ici encore de façon connue en elle-même, mesures auxquelles est asservi le fonctionnement de l'automate.

Dans la suite de la description on utilisera les mêmes numéros de références pour désigner des éléments similaires et/ou identiques.

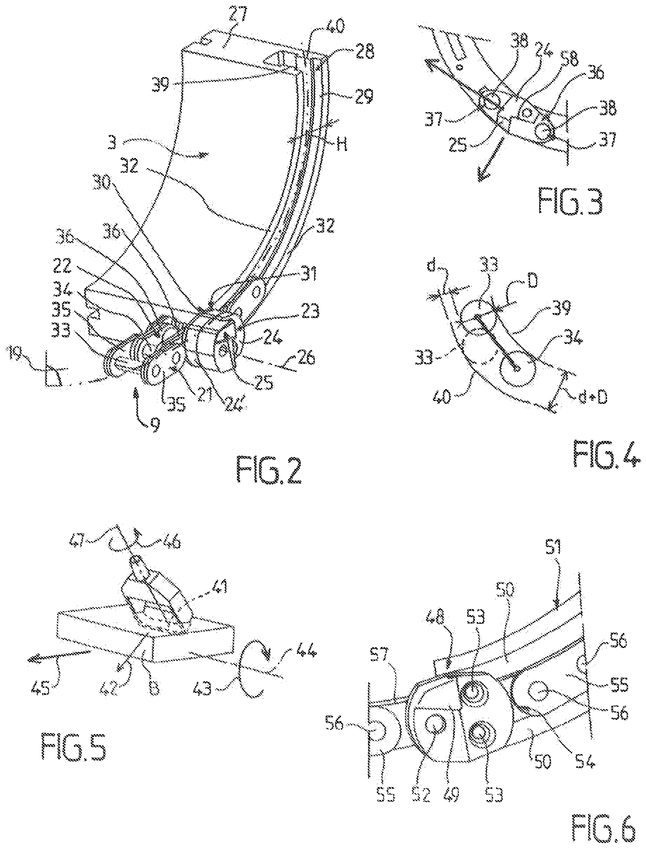

La figure 2 montre une portion de la chaîne 9 sans fin selon le mode de réalisation de l'invention plus particulièrement décrit ici.

La chaîne 9 est symétrique autour d'un plan axial longitudinal 19. Elle est formée par un assemblage de maillons 21, 22 articulés comportant sur un flan latéral 23 une plaquette (24) (fixée sur une assise ou porte plaquette 24') et munie d'une arête de coupe 25 en saillie dans une direction normale (trait mixte 26) par rapport au flan 23.

Comme cela apparaît sur les figures 1 à 1C, la trajectoire 4 pour effectuer la découpe se fait selon une courbe 5 qui présente au moins un changement de direction.

Par exemple la trajectoire présente au moins un point d'inflexion I, par exemple en ayant une forme sinusoïdale ou sensiblement sinusoïdale.

Dans le mode de réalisation plus particulièrement décrit en référence notamment à la figure 2 le guide 3 comprend une enceinte longitudinale 27 de passage de la chaîne 9.

La gaine est de largeur déterminée H, la plaquette 24 étant agencée pour effectuer la découpe sur une largeur 2e de trait de coupe 6 supérieure à H.

L'enceinte 27 est munie d'un côté d'une paroi latérale 28 ajourée de part en part définissant une fente 29 longitudinale.

La chaîne 9 comprend quant à elle plusieurs joues latérales 30 de guidage, réparties régulièrement le long de la chaîne. Les joues latérales 30 comprennent des bords périphériques 31 agencés pour coopérer à frottement (ou à roulement) avec les côtés 32 de la fente 29 sur la face externe de la paroi latérale 28 ajourée.

Plus précisément chaque maillon articulé 21, 22 de la chaîne est formé par deux axes parallèles 33, 34 reliés entre eux par des plaques ou pastilles de jonction 35, 36 les joues latérales 30 formant certaines de ces pastilles de jonction entre deux axes adjacents.

Pour assurer l'articulation de la chaîne, il existe bien entendu un axe commun entre deux maillons adjacents, la pastille de jonction d'un maillon étant décalée latéralement par rapport à celle du maillon adjacent, de façon connue en elle-même.

En référence à la figure 2, la plaquette 24 de coupe est fixée sur le porte plaquette 24' lui-même opposé à une joue latérale 30 ou portion coopérant à frottement avec l'enceinte

Comme représenté sur la figure 3, le porte outil comporte deux évidements cylindriques 37 coopérant respectivement avec l'extrémité 38 de l'axe des maillons adjacents (ou un pion solidaire de ladite extrémité).

Dans le mode de réalisation plus particulièrement décrit ici l'enceinte 27 comprend deux nervures longitudinales 39, 40, à savoir une première nervure 39 centrale interne (cf. également figure 4) agencée pour coopérer à roulement ou frottement avec les axes 33, 34 d'articulation entre maillons et une seconde nervure 40 en vis à vis de la première nervure, la distance orthogonale entre la première et la seconde nervure étant égale à D (diamètre des axes) + d avec $d \leq 0,5$ mm, par exemple < 0,1 mm.

En référence à la figure 5 et avec une chaîne 41 telle que décrit, il est possible de découper dans la plaque ou bloc, selon de multiples angles ou directions d'attaque, et notamment dans le sens longitudinal, i.e. dans une direction normale par rapport au flan de la chaîne (flèche 42) mais également (en faisant pivoter la chaîne et son guide) en rotation (flèche 43) par rapport à l'axe longitudinal 44 de ladite chaîne (dont l'attaque se fait dans le bloc B selon la flèche 45), comme une pelleteuse à godet.

Une rotation (flèche 46) autour d'un axe 47 perpendiculaire à l'axe 44 permet également d'autres angles d'attaque.

On a représenté sur la figure 6 un autre mode de réalisation d'une plaquette 48, munie de l'arête de coupe 49 dont les joues coopèrent aux bords périphériques 50 du guide 51.

La plaquette 48 est fixée sur le porte plaquette par un pion 52 coaxial avec un axe de maillon et par deux vis 53 de fixation, l'évidement 54 du guide laissant ou non passer les pastilles 55 de jonction entre axes 56 de maillons les plus externes, les pastilles 57 correspondant aux pastilles de maillons les plus internes.

Sur la figure 6 le guide 51 est en partie représenté de façon ajourée pour plus de visibilité des pastilles 55, 57 de forme ovale.

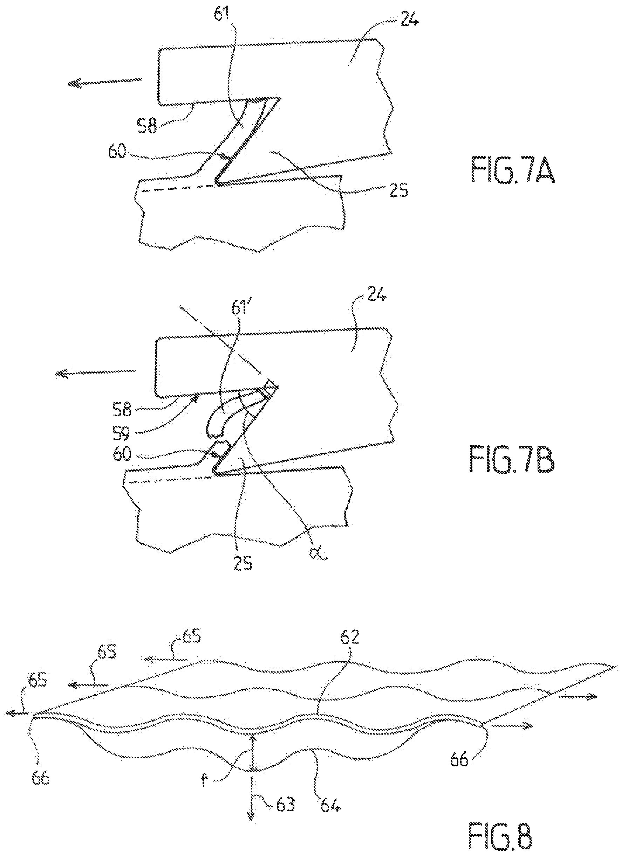

On a représenté sur les figures 7A et 7B une vue agrandie, partielle et schématique de la plaquette de coupe 24.

La plaquette 24 comporte un décrochement 58 présentant une face 59 de forme droite ou concave suivant un angle α aigu ou droit par rapport à l'arête de coupe 25, et plus précisément par rapport à sa face de coupe interne 60, agencée pour fragmenter les copeaux 61 (ou 61') générés au niveau de la face de coupe.

La plaquette est par exemple amovible grâce à des moyens de fixations telles que des vis (non représentées).

En référence à la figure 8, et lorsque la chaîne est d'une longueur importante (supérieure à 1m), le guide 62 peut avoir tendance à s'affaisser (flèche 63 et courbe 64).

De façon à maintenir la chaîne coupante aussi conforme que possible à sa position de coupe programmée, et éviter ainsi une flèche f gênante, on précontraint en traction (flèches 65) le guide, par exemple avec une force de 50 daN, puis on bloque les extrémités 66 du guide de façon connue en elle-même, le guide 62 étant immobilisé.

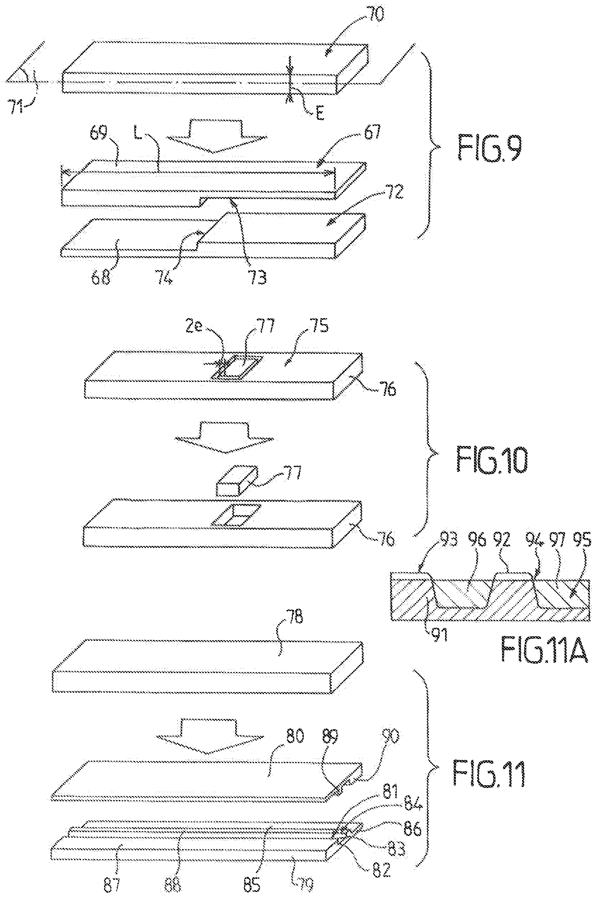

On a représenté sur les figures 9 à 11 trois ensembles de plaques obtenus avec le dispositif et/ou le procédé selon le mode de réalisation de l'invention plus particulièrement décrit ici.

La figure 9 montre en ensemble 67 de deux plaques 68, 69 obtenues par découpe d'un bloc métallique 70 ou composite (par exemple en résine thermodurcissable et fibres de carbone) de composition classiquement adoptée dans le cadre de la fabrication de structure d'avion ou de pièces dans le domaine de l'aérospatial ou de l'automobile, s'étendant autour d'un plan 71 (traits mixtes) découpé avec le dispositif 1 décrit ci-dessus.

Plus précisément, l'ensemble comprend une première plaque 68 présentant une face supérieure 72 et une deuxième plaque 69 présentant une face inférieure 73, la face supérieure 72 de la première plaque présentant une surface ayant au moins une ligne d'inflexion 74 par rapport au plan 71, la face inférieure 73 étant de forme complémentaire obtenue par découpe du bloc sur une hauteur constante 2e (cf. figure 1B).

Avantageusement, la longueur et/ou la largeur des plaques est supérieure à 600 mm et/ou l'épaisseur E du bloc est supérieure à 600 mm (même si cette épaisseur peut tout à fait être beaucoup plus faible, comme c'est le cas en aéronautique où l'épaisseur est souvent inférieure à 300 mm).

La figure 10 montre un autre ensemble 75 de deux plaques ou pièces 76, 77, à savoir une petite plaque parallélépipédique 77 et une plaque de base 76 l'englobant, la poche ainsi constituée étant non débouchante.

Dans ce cas une rainure de la forme de la poche et de la profondeur de ladite poche est réalisée au préalable de façon connue en elle-même, puis un dispositif comme celui décrit en référence à la figure 5 est ensuite descendu dans la rainure, puis translaté pour délayer le bloc 77.

La figure 11 montre un bloc 78 permettant d'obtenir deux plaques 79-80 présentant plusieurs lignes d'inflexion, en l'espèce les lignes 81, 82, 83, 84, 85 et 86 parallèles permettant d'obtenir une pièce inférieure 79 avec deux nervures 87, et 88, de renfort dans le sens longitudinal, et une pièce supérieure 80 avec nervures 89 et 90 complémentaires aux évidements en vis à vis.

Sur la figure 11A, il est représenté schématiquement en coupe une première plaque inférieure 91 découpée dans le bloc 95 par la chaîne 92, chaîne qui sort du bloc en 93 et 94, ce qui permet d'obtenir plusieurs pièces 96, 97 séparées complémentaires de la première plaque.

On va maintenant décrire la fabrication de l'ensemble 67 en utilisant le dispositif de la figure 1.

Après choix du bloc en matériau métallique ou composite correspondant aux pièces que l'on veut fabriquer, on programme par l'intermédiaire de l'automate, la découpe que l'on veut réaliser.

Le guide est choisi en fonction des paramètres nécessaires à la fabrication et peut par exemple être conçu de façon démontable et amovible pour permettre des épaisseurs de traits de coupe 2e de largeurs différentes, par exemple comprises entre 1cm et 2cm.

Le bloc 2 est alors mis en place face à un dispositif de coupe. Celle-ci est alors réalisée de façon connue en elle-même, la lubrification de la chaine étant effectuée en permanence, par exemple par l'intermédiaire d'une injection de liquide lubrifiant en différents points d'injection du guide régulièrement répartis le long de celui-ci.

La pièce 2 est alors avancée en étant poussée sur la scie ou a contrario, c'est le dispositif lui-même qui vient se déplacer sur la pièce qui a alors été préalablement fixée de façon connue en elle-même sur un support (non représenté) jouant également un rôle de rigidificateur.

Le guide et les plaquettes de coupe sont alors progressivement poussés en vis à vis du bloc 2 séparant petit à petit les pièces supérieure et inférieure 68 et 69, la chaîne étant ici poussée dans le sens transversal du bloc. Dans le cas par exemple de fabrication de plaque du type de celle indiquée à la figure 11, le déplacement de la scie s'effectuera cette fois-ci dans le sens longitudinal des plaques.

Au fur et à mesure que la scie découpe, les copeaux sont évacués facilement, notamment du fait de l'existence du brise-copeaux du type décrit ci-dessus.

Les plaques 68 et 69 sont par ailleurs progressivement saisies et maintenues de façon connue en elle-même, pour être ensuite évacuées.

Grace à l'invention il est ainsi possible d'obtenir deux plaques de forme très proche avec une très petite perte de matériau et/ou de métal, à savoir et uniquement l'épaisseur du trait de coupe 2e.

Ces pièces très proches de la forme usinée définitive peuvent être alors finalisées sans trop de difficultés.

Comme il va de soi et comme il résulte d'ailleurs de ce qui précède, la présente invention n'est pas limitée aux modes de réalisation plus particulièrement décrits. Elle en embrasse au contraire toutes les variantes et notamment celles où on découpe simultanément non pas deux pièces en vis à vis mais un jeu de trois pièces voir de quatre pièces imbriquées les unes dans les autres, auquel cas les plaquettes de coupe et leur guide seront configurés en conséquence.

Dans un mode de réalisation, la trajectoire de la chaîne est alors amenée à sortir du bloc et à y retourner une et/ou plusieurs fois (autant de fois qu'il y a de pièces en plus de la pièce ou plaque inférieure).

## Revendications

1. Dispositif (1) de découpe d'une pièce (2) dans un bloc (B) suivant une trajectoire déterminée, comprenant un guide formant ladite trajectoire qui présente au moins un point d'inflexion et un support (9) d'au moins un élément de coupe, souple ou articulé, s'étendant autour d'un plan longitudinal (19) et monté coulissant dans le guide (3), ledit élément de coupe comprenant une arête de coupe (25) en saillie dans une direction normale par rapport audit plan longitudinal (19), **caractérisé en ce que** le bloc est en matériau métallique ou composite dont la dureté Rockwell est supérieure à 30, le support comporte un flan latéral (23), **en ce que** la trajectoire définie par le guide s'étend dans un plan parallèle audit flan latéral et **en ce que** le flan latéral est muni d'au moins une plaquette (24) de coupe formant l'élément de coupe, ladite arête de coupe étant agencée en saillie pour effectuer la découpe dans une direction normale (26) par rapport au dit flan.

2. Dispositif selon la revendication 1, **caractérisé en ce que** le guide forme une trajectoire présentant au moins deux points d'inflexion.

3. Dispositif selon l'une quelconque des revendications précédentes, **caractérisé en ce que** le guide (3) comprend une enceinte (27) longitudinale de passage du support (9), de largeur déterminée,
et **en ce que** la ou les plaquettes (24) sont agencées pour effectuer la découpe sur une largeur supérieure à celle du guide.

4. Dispositif selon l'une quelconque des revendications précédentes, **caractérisé en ce que** le support est une chaîne (9) sans fin.

**5.** Dispositif selon la revendication 4, **caractérisé en ce que** ladite enceinte (27) étant munie d'un côté d'une paroi latérale (28) ajourée définissant une fente (29) longitudinale, la chaîne comprend plusieurs joues latérales (30) de guidage réparties régulièrement le long de la chaîne, lesdites joues comprenant des bords périphériques (31) agencés pour coopérer à frottement ou roulement avec les côtés (32) de ladite fente sur la face externe de ladite paroi latérale (28) ajourée.

**6.** Dispositif selon la revendication 5, **caractérisé en ce que** chaque maillon (21, 22) étant formé par deux axes parallèles (33, 34) reliés entre eux de part et d'autre par une plaque de jonction (35, 36), les joues latérales (30) sont formées par certaines des plaques de jonction entre deux axes adjacents.

**7.** Dispositif selon la revendication 6, **caractérisé en ce que** la plaquette de coupe (24) étant fixée sur une joue latérale formant porte plaquette (24'), le porte plaquette (24') comporte deux évidements cylindriques coopérant respectivement avec l'extrémité de l'axe des maillons adjacents et/ou un pion solidaire de la dite extrémité.

**8.** Dispositif selon l'une quelconque des revendications 4 à 7, **caractérisé en ce que** l'enceinte comprend au moins une première nervure (39) centrale interne longitudinale agencée pour coopérer à frottement ou roulement avec les axes (33, 34) d'articulation des maillons entre eux.

**9.** Dispositif selon la revendication 8, **caractérisé en ce que** l'enceinte comprend une seconde nervure (40) centrale en vis à vis de la première nervure (39).

**10.** Dispositif selon la revendication 9, **caractérisé en ce que** la distance orthogonale entre la première (39) et la seconde nervures (40) est égale au diamètre D des axes d'articulation augmenté de la distance d, avec d < 0,1 mm.

**11.** Dispositif selon l'une quelconque des revendications précédentes, **caractérisé en ce que** la plaquette de coupe (24) est fixée sur une joue latérale formant le porte plaquette (24').

**12.** Dispositif selon l'une quelconque des revendications précédentes, **caractérisé en ce que** le guide est précontraint dans le sens longitudinal de la chaîne et/ou du guide.

**13.** Dispositif selon l'une quelconque des revendications précédentes, **caractérisé en ce qu'**il comporte des moyens de lubrification sous émulsion par arrosage de l'intérieur du guide.

**14.** Dispositif selon l'une quelconque des revendications précédentes, **caractérisé en ce qu'**il comporte des moyens de bridage latéraux du guide aux extrémités, agencés pour maintenir et rigidifier le guide dans les trois directions d'un repère axionométrique.

**15.** Dispositif selon l'une quelconque des revendications précédentes, **caractérisé en ce que** la plaquette (24) de coupe comporte un décrochement (58) présentant une face (59) de forme concave suivant un angle aigu ou droit par rapport à l'arête de coupe, agencée pour fragmenter les copeaux (61, 61') générés au niveau de ladite arête de coupe.

**16.** Dispositif selon l'une quelconque des revendications précédentes, **caractérisé en ce que** la plaquette (24) est amovible et comporte des moyens de fixation sur le porte plaquette par vis.

**17.** Dispositif selon l'une quelconque des revendications précédentes, **caractérisé en ce que** la trajectoire et/ou le guide présente une forme au moins en partie sinusoïdale.

**18.** Dispositif selon l'une quelconque des revendications précédentes, **caractérisé en ce que** la chaîne comporte plusieurs plaquettes (24) de coupe agencées pour que les arêtes de coupe (25) d'au moins deux plaquettes soient décalées avec un recouvrement inférieur à 2 mm.

**19.** Procédé de découpe d'une pièce (2) dans un bloc par un dispositif (1) de découpe suivant une trajectoire déterminée qui présente au moins un point d'inflexion, dans lequel on guide un support souple ou articulé (9) d'au moins un élément de coupe, monté coulissant dans un guide (3) formant ladite trajectoire, et s'étendant autour d'un plan longitudinal (19), l'élément de coupe étant muni d'une arête de coupe (25) en saillie, dans une direction normale par rapport audit plan longitudinal (19), **caractérisé en ce que** le bloc est en matériau métallique ou composite dont la dureté Rockwell est supérieure à 30, le support comportant un flan latéral comprenant au moins une plaquette (24) de coupe

formant l'élément de coupe et munie de ladite arête de coupe (25) en saillie, on effectue ladite découpe avec ledit support dans une direction normale (26) par rapport au dit flan et **en ce que** la trajectoire définie par le guide s'étend dans un plan parallèle audit flan latéral.

20. Procédé selon la revendication 19, **caractérisé en ce que** on effectue ladite découpe sur une longueur L de pièce supérieure ou égale à 600 mm.

21. Procédé selon l'une quelconque de revendications 19 et 20 **caractérisé en ce qu'**on effectue ladite découpe sur une épaisseur E de bloc inférieure à 300 mm.

22. Procédé selon l'une quelconque de revendications 19 à 21, **caractérisé en ce qu'**on découpe la pièce selon une trajectoire présentant au moins deux points d'inflexion.

23. Procédé selon l'une quelconque des revendications 19 à 22, **caractérisé en ce que** on précontraint en traction le guide (5) avant découpe.

24. Procédé selon l'une quelconque des revendications 19 à 23, **caractérisé en ce que**, à partir d'un bloc B d'épaisseur déterminée, on découpe simultanément au moins deux plaques ou pièces (68, 69 ; 76, 76; 79,80) imbriquées correspondantes l'une dans l'autre.

**Patentansprüche**

1. Vorrichtung (1) zum Schneiden eines Teils (2) aus einem Block (B) gemäß einer bestimmten Bahn mit einer Führung, welche die Bahn bildet, die mindestens einen Wendepunkt und einen flexiblen oder angelenkten Träger (9) mindestens eines Schneidelements aufweist, welcher sich um eine Längsebene (19) erstreckt und verschieblich in der Führung (3) montiert ist, wobei das Schneidelement eine Schneide (25) aufweist, die in einer zur Längsebene (19) senkrechten Richtung vorragt,
**dadurch gekennzeichnet,**
**dass** der Block aus einem metallischen Werkstoff oder Verbundwerkstoff mit einer Rockwell-Härte größer als 30 besteht, der Träger eine Seitenplatte (23) aufweist,
**dass** die durch die Führung festgelegte Bahn sich in einer Ebene erstreckt, die parallel zu der Seitenplatte verläuft, und
**dass** die Seitenplatte mit mindestens einem das Schneidelement bildenden Schneideinsatz (24) versehen ist, wobei die Schneide vorragend angeordnet ist, um das Schneiden in einer zu der Platte senkrecht verlaufenden Richtung (26) durchzuführen.

2. Vorrichtung nach Anspruch 1,
**dadurch gekennzeichnet,**
**dass** die Führung eine Bahn mit mindestens zwei Wendepunkten bildet.

3. Vorrichtung nach einem der vorhergehenden Ansprüche,
**dadurch gekennzeichnet,**
**dass** die Führung (3) eine Längskammer (27) mit einer bestimmten Breite für die Durchführung des Trägers (9) aufweist und dass der oder die Schneideinsätze (24) angeordnet sind, um das Schneiden auf einer Breite durchzuführen, die größer ist als diejenige der Führung.

4. Vorrichtung nach einem der vorhergehenden Ansprüche,
**dadurch gekennzeichnet,**
**dass** der Träger eine Endloskette (9) ist.

5. Vorrichtung nach Anspruch 4,
**dadurch gekennzeichnet,**
**dass** die Kammer (27) auf einer Seite mit einer durchbrochenen Seitenwand (28) versehen ist, die einen Längsschlitz (29) definiert, die Kette mehrere regelmäßig entlang der Kette verteilte Führungsseitenwangen (30) umfasst, wobei die Wangen Umfangsränder (31) aufweisen, die angeordnet sind, um mit den Seiten (32) des Schlitzes auf der Außenfläche der durchbrochenen Seitenwand (28) reibschlüssig oder rollschlüssig zusammenzuwirken.

**6.** Vorrichtung nach Anspruch 5,
**dadurch gekennzeichnet,**
**dass** bei Bildung des jeweiligen Kettenglieds (21, 22) durch zwei parallele Achsen (33, 34), die über eine Verbindungsplatte (35, 36) beidseitig miteinander verbunden sind, die Seitenwangen (30) durch manche der Verbindungsplatten zwischen zwei angrenzenden Achsen gebildet sind.

**7.** Vorrichtung nach Anspruch 6,
**dadurch gekennzeichnet,**
**dass** bei Befestigung des Schneideinsatzes (24) an einer einen Schneideinsatzträger (24') bildenden Seitenwange der Schneideinsatzträger (24') zwei zylindrische Ausnehmungen aufweist, die jeweils mit dem Ende der Achse der angrenzenden Kettenglieder und/oder einem mit dem Ende fest verbundenen Zapfen zusammenwirken.

**8.** Vorrichtung nach einem der Ansprüche 4 bis 7,
**dadurch gekennzeichnet,**
**dass** die Kammer mindestens eine erste mittige interne Längsrippe (39) aufweist, die angeordnet ist, um reibschlüssig oder rollschlüssig mit den Achsen (33, 34) für die Anlenkung der Kettenglieder untereinander zusammenzuwirken.

**9.** Vorrichtung nach Anspruch 8,
**dadurch gekennzeichnet,**
**dass** die Kammer eine zweite mittige Rippe (40) gegenüber der ersten Rippe (39) aufweist.

**10.** Vorrichtung nach Anspruch 9,
**dadurch gekennzeichnet,**
**dass** der orthogonale Abstand zwischen der ersten (39) und der zweiten Rippe (40) gleich dem Durchmesser D der Gelenkachsen zuzüglich des Abstands d, wobei d < 0,1 mm.

**11.** Vorrichtung nach einem der vorhergehenden Ansprüche,
**dadurch gekennzeichnet,**
**dass** der Schneideinsatz (24) an einer den Scheineinsatzträger (24') bildenden Seitenwange befestigt ist.

**12.** Vorrichtung nach einem der vorhergehenden Ansprüche,
**dadurch gekennzeichnet,**
**dass** die Führung in Längsrichtung der Kette und/oder der Führung vorgespannt ist.

**13.** Vorrichtung nach einem der vorhergehenden Ansprüche,
**dadurch gekennzeichnet,**
**dass** sie Mittel zum Schmieren unter Emulsion durch Besprühen des Inneren der Führung aufweist.

**14.** Vorrichtung nach einem der vorhergehenden Ansprüche,
**dadurch gekennzeichnet,**
**dass** sie seitliche Mittel zum Klemmen der Führung an den Enden aufweist, welche angeordnet sind, um die Führung in den drei Richtungen eines axonometrischen Bezugssystems zu halten und zu versteifen.

**15.** Vorrichtung nach einem der vorhergehenden Ansprüche,
**dadurch gekennzeichnet,**
**dass** der Schneideinsatz (24) einen Rücksprung (58) mit einer Fläche (59) aufweist, die konkav gemäß einem in Bezug auf die Schneide spitzen oder geraden Winkel ausgebildet ist und angeordnet ist, um die an der Schneide entstehenden Späne (61, 61') zu zerkleinern.

**16.** Vorrichtung nach einem der vorhergehenden Ansprüche,
**dadurch gekennzeichnet,**
**dass** der Schneideinsatz (24) abnehmbar ist und Mittel zur Verschraubung an dem Schneideinsatzträger aufweist.

**17.** Vorrichtung nach einem der vorhergehenden Ansprüche,
**dadurch gekennzeichnet,**
**dass** die Bahn und/oder die Führung mindestens teilweise sinusförmig ausgebildet ist.

**18.** Vorrichtung nach einem der vorhergehenden Ansprüche,

**dadurch gekennzeichnet,**
**dass** die Kette mehrere Schneideinsätze (24) aufweist, welche so angeordnet sind, dass die Schneiden (25) von mindestens zwei Schneideinsätzen versetzt mit einer Überlappung von weniger als 2 mm sind.

**19.** Verfahren zum Schneiden eines Teils (2) aus einem Block (B) mittels einer Schneidevorrichtung (1) gemäß einer bestimmten Bahn, die mindestens einen Wendepunkt aufweist, bei dem ein flexibler oder angelenkter Träger (9) mindestens eines Schneidelements geführt wird, welcher in einer die Bahn bildenden Führung (3) verschieblich montiert ist und sich um eine Längsebene (19) erstreckt, wobei das Schneidelement eine Schneide (25) aufweist, die in einer zur Längsebene (19) senkrechten Richtung vorragt, **dadurch gekennzeichnet,**
**dass** der Block aus einem metallischen Werkstoff oder Verbundwerkstoff mit einer Rockwell-Härte größer als 30 besteht, der Träger eine Seitenplatte mit mindestens einem Schneideinsatz aufweist, welche das Schneidelement bildet und mit der vorragenden Schneide (25) versehen ist, das Schneiden mittels des Trägers in einer zu der Platte senkrecht verlaufenden Richtung (26) durchgeführt wird und die durch die Führung bestimmte Bahn sich in einer parallel zu der Seitenplatte verlaufenden Ebene erstreckt.

**20.** Verfahren nach Anspruch 19,
**dadurch gekennzeichnet,**
**dass** das Schneiden auf einer Länge L des Teils größer oder gleich 600 mm durchgeführt wird.

**21.** Verfahren nach einem der Ansprüche 19 und 20,
**dadurch gekennzeichnet,**
**dass** das Schneiden auf einer Dicke E des Blocks geringer als 300 mm durchgeführt wird.

**22.** Verfahren nach einem der Ansprüche 19 bis 21,
**dadurch gekennzeichnet,**
**dass** das Teil gemäß einer Bahn mit mindestens zwei Wendepunkten geschnitten wird.

**23.** Verfahren nach einem der Ansprüche 19 bis 22,
**dadurch gekennzeichnet,**
**dass** die Führung (5) vor dem Schneiden auf Zug vorgespannt wird.

**24.** Verfahren nach einem der Ansprüche 19 bis 23,
**dadurch gekennzeichnet,**
**dass** ausgehend von einem Block B mit einer bestimmten Dicke mindestens zwei korrespondierende, ineinander greifende Platten oder Teile (68,69; 76,76; 79,80) gleichzeitig geschnitten werden.

**Claims**

**1.** Device (1) for cutting a part (2) from a block (B) along a given trajectory, comprising a guide forming said trajectory which has at least one inflection point and a flexible or articulated support (9) for at least one cutting element extending about a longitudinal plane (19) and mounted slidably in the guide (3), said cutting element comprising a cutting edge (25) projecting in a normal direction relative to said longitudinal plane (19), **characterised in that** the block is made of metallic or composite material of which the Rockwell hardness is greater than 30, the support comprises a lateral blank (23), **in that** the trajectory defined by the guide extends in a plane parallel to said lateral blank and **in that** the lateral blank is provided with at least one cutting insert (24) forming the cutting element, said cutting edge being arranged so as to project in order to carry out cutting in a normal direction (26) relative to said blank.

**2.** Device according to claim 1, **characterised in that** the guide forms a trajectory having at least two inflection points.

**3.** Device according to any one of the preceding claims, **characterised in that** the guide (3) comprises a longitudinal cavity (27) for passage of the support (9), having a given width, and **in that** the insert or inserts (24) are arranged so as to carry out cutting over a width greater than that of the guide.

**4.** Device according to any one of the preceding claims, **characterised in that** the support is an endless chain (9).

**5.** Device according to claim 4, **characterised in that**, said cavity (27) being provided on one side with an apertured lateral wall (28) defining a longitudinal slot (29), the chain comprises a plurality of lateral guide cheeks (30) distributed regularly along the chain, said guide cheeks comprising peripheral edges (31) arranged so as to cooperate, upon friction or rolling, with the sides (32) of said slot on the outer face of said apertured lateral wall (28).

6. Device according to claim 5, **characterised in that**, each link (21, 22) being formed by two parallel axes (33, 34) connected to each other on either side by a link plate (35, 36), the lateral guide cheeks (30) are formed by some of the link plates for connection between two adjacent axes.

7. Device according to claim 6, **characterised in that**, the cutting insert (24) being fixed to a lateral guide cheek forming an insert holder (24'), the insert holder (24') comprises two cylindrical recesses respectively cooperating with the end of the axis of adjacent links and/or a slug integral with said end.

8. Device according to any one of claims 4 to 7, **characterised in that** the cavity comprises at least one first longitudinal internal central rib (39) arranged so as to cooperate, upon friction or rolling, with the axes (33, 34) for mutual articulation of the links to each other.

9. Device according to claim 8, **characterised in that** the cavity comprises a second central rib (40) opposite the first rib (39).

10. Device according to claim 9, **characterised in that** the orthogonal distance between the first (39) and second (40) ribs is equal to the diameter D of the articulation axes plus the distance d, where d < 0 .1 mm.

11. Device according to any one of the preceding claims, **characterised in that** the cutting insert (24) is fixed to a lateral guide cheek forming the insert holder (24').

12. Device according to any one of the preceding claims, **characterised in that** the guide is prestressed in the longitudinal direction of the chain and/or of the guide.

13. Device according to any one of the preceding claims, **characterised in that** it comprises means for lubrication with emulsion by spraying the interior of the guide.

14. Device according to any one of the preceding claims, **characterised in that** it comprises lateral means for clamping the guide at the ends, arranged in order to maintain and stiffen the guide in the three directions of an axonometric reference frame.

15. Device according to any one of the preceding claims, **characterised in that** the cutting insert (24) comprises a setback (58) having a face (59) of concave shape at an acute or right angle relative to the cutting edge, arranged so as to fragment the chips (61, 61') generated at the level of said cutting edge.

16. Device according to any one of the preceding claims, **characterised in that** the insert (24) is removable and comprises means for fixing to the insert holder by screws.

17. Device according to any one of the preceding claims, **characterised in that** the trajectory and/or the guide has an at least partly sinusoidal shape.

18. Device according to any one of the preceding claims, **characterised in that** the chain comprises a plurality of cutting inserts (24) arranged so that the cutting edges (25) of at least two inserts are offset with an overlap of less than 2 mm.

19. Method for the cutting of a part (2) from a block by a cutting device (1) along a given trajectory which has at least one inflection point, in which is guided a flexible or articulated support (9) for at least one cutting element, mounted slidably in a guide (3) forming said trajectory, and extending about a longitudinal plane (19), the cutting element being provided with a cutting edge (25) projecting in a normal direction relative to said longitudinal plane (19), **characterised in that** the block is made of metallic or composite material of which the Rockwell hardness is greater than 30, the support comprising a lateral blank including at least one cutting insert (24) forming the cutting element and provided with said projecting cutting edge (25), said cutting is carried out with said support in a normal direction (26) relative to said blank and **in that** the trajectory defined by the guide extends in a plane parallel to said lateral blank.

20. Method according to claim 19, **characterised in that** said cutting is carried out over a part length L greater than or equal to 600 mm.

**21.** Method according to any one of claims 19 and 20, **characterised in that** said cutting is carried out over a block thickness E of less than 300 mm.

**22.** Method according to any one of claims 19 to 21, **characterised in that** the part is cut out along a trajectory having at least two inflection points.

**23.** Method according to any one of claims 19 to 22, **characterised in that** the guide (5) is subjected to tensile prestressing before cutting out.

**24.** Method according to any one of claims 19 to 23, **characterised in that**, from a block B having a given thickness, at least two corresponding plates or parts (68, 69; 76, 76; 79, 80) interlocking with each other are cut out simultaneously.

EP 3 010 689 B1

FIG.1

FIG.1A

FIG.1C

FIG.1B

FIG.2

FIG.3

FIG.4

FIG.5

FIG.6

61
24

58
60
25

**FIG.7A**

61'
24

58
59
60
25
α

**FIG.7B**

65
65
62
65
66
f
63
64
66

**FIG.8**

FIG.9

FIG.10

FIG.11A

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 202878426
- DE 202004007148
- NL 8603213